# EUROPEAN PATENT APPLICATION

(11) **EP 3 028 609 A1**
(43) Date of publication of application: **08.06.2016**
(21) Application number: 14196280.3
(22) Date of filing: 04.12.2014
(51) Int. Cl.: A47J 31/40, A47J 42/50

(54) **Container for storing and dispensing a product**

(71) Applicant: Nestec S.A., 1800 Vevey (CH)
(72) Inventor: Montarras, Marc, 1009 Pully (CH); Varbanov, Petar, 1630 Bulle (CH); Contal, Alain, 1315 La Sarraz (CH)
(74) Representative: Ducreux, Marie

(57) **Abstract**

The present invention relates to a container (1) for storing and dispensing a bulk material, the container comprising a tank (2), and a dispenser for dispensing the product from the tank (2) comprising an inner rotatable disc member (3) with at least one aperture (31), and an outer fixed disc member (4) with a central aperture (42) and at least one outlet aperture (41) therein, wherein the inner disc member (3) is configured for being selectively rotatable with respect to the outer disc member (4) such that at least in one rotational position of the inner disc member (3), the at least one aperture (31) of the inner disc member (3) overlaps with the at least one outlet aperture (41) of the outer disc member (4) for enabling the dispensing of the product from the container, and wherein the container further comprises barrier means (8) provided between the central aperture (42) of the outer disc member (4) and the at least one aperture (31) of the inner rotatable disc member (3).

The present invention further relates to a system comprising such container and a beverage preparation machine to which the container is selectively connectable.

## Description

### Field of the invention

The present invention relates to a container designed for storing and dispensing a bulk material from the container to a dedicated beverage preparation machine, the container being equipped with enhanced dispenser.

### Background of the invention

Beverage preparation machines designed for preparing beverages are well-known and commonplace in both domestic and commercial environments. These machines are generally configured for preparing cold or hot beverages on-demand such as in particular coffee or tea beverages in case the machine comprises a heating unit, or chilled drinks such as in particular soft drinks or water. In the latter case, the machine may be equipped with a cooling unit.

A known principle in this field is the preparation of a beverage by means of a container containing a beverage ingredient, said container being connectable to the beverage preparation machine. Portioned amounts of beverage ingredient can be dispensed during a beverage preparation process into a mixing chamber of the machine. In the mixing chamber, a beverage is then prepared by mixing the dosed amount of ingredients with diluent such as water.

Application WO 2012/084964 A1 relates to a system for preparing a beverage upon from a beverage ingredient with diluent such as water. The system comprises a beverage preparation machine and a container selectively connectable to the machine and designed for storing and dispensing a beverage ingredient. The container comprises a dispenser for selectively dispensing the ingredient from the container to a mixing chamber of the machine. The dispenser comprises an inner rotatable disc member having a dosing aperture and an outer fixed disc member with an outlet aperture. The dosing aperture of the inner disc member can be brought selectively into overlap with the outlet aperture of the outer disc member in order to enable an amount of beverage ingredient to be dispensed from the container. This is obtained by rotation of the inner disc member via a dedicated actuation shaft of the beverage preparation machine that selectively connects to the inner disc member via a central hole of the outer disc member. Further, the inner disc member comprises scrapping means arranged on an inner surface of the inner disc member in order to support the dispensing of the product from the container.

A drawback of the known type of container is that the dispenser of the container is not hermetically sealed and that the beverage ingredient, such as e.g. a coffee powder, may leak from the container and, in particular, from the central hole in the outer disc member, e.g. by sliding between the inner and outer disc members. This powder may then soil the beverage preparation machine as well as the environment of the machine, e.g. when the container is removed therefrom. There is a need for improving the sealing of such a container.

An object of the present invention is to provide a container with enhanced dispenser that solves the above-indicated problems. Thereby, it is particularly desired to provide a container that enables a prevention of leakage of product from the container.

It would be advantageous to provide a container that reduces the ingress of humidity into the container, e.g. the ambient humidity or humidity generated during the beverage preparation process of the machine to which the container is connected.

It would be advantageous to provide a container that enables a reliable discharge of reproducible amounts of stored product also in case the container is almost empty. Further, in case of the container being almost empty, it has been observed that for the last number of doses from the container the amount of product being dispensed from the container is not very consistent. This may lead to an unpleasant deviation of the prepared beverage regarding its strength respectively concentration.

### Summary of the invention

In a first aspect of the invention, there is provided a container for storing and dispensing a bulk material, the container comprising :
- a tank, and
- a dispenser for dispensing the product from the tank comprising an inner rotatable disc member with at least one aperture, and an outer fixed disc member with a central aperture and at least one outlet aperture therein, wherein the inner disc member is configured for being selectively rotatable with respect to the outer disc member such that at least in one rotational position of the inner disc member, the at least one aperture of the inner disc member overlaps with the at least one outlet aperture of the outer disc member for enabling the dispensing of the product from the container, and
wherein the container further comprises a barrier provided between the central aperture of the outer disc member and the at least one aperture of the inner rotatable disc member.

According to the invention, the barrier is preferably configured to prevent a discharge of the bulk material from the central aperture of the outer disc member.

It is to be understood that the inner and outer disc members are preferably placed sufficiently close to each other such that essentially no bulk material can enter the interstice between the disc members, but at the same time such that a rotational movement of the inner and outer disc member relative to each other is still possible. The barrier provides a reliable prevention of leakage from the interstice of the disc members and thus from the tank of the container through the central aperture of the outer disc member. Hence, even in the event that a portion of the bulk material is caught in the interstice between the inner and outer disc member, the product is effectively prevented from leaking from the central aperture of the container and thus from soiling a beverage preparation machine connected to the container and/or the environment of the container.

Further, the barrier is preferably configured to prevent the ingress of humidity into the tank of the container. Thereby, as the barrier is preferably arranged in a fluid flow path between the central aperture of the outer disc member and the at least one aperture of the inner rotatable disc member, the ingress of humidity from said central aperture into the interstice between the inner and outer disc member and thus into the at least one aperture of the inner disc member and into to the tank of the container is effectively prevented.

The barrier is preferably designed for providing a meander-shaped barrier to product flow and/or humidity. In particular, when seen in sectional side-view, the barrier may present a meander-like shape.

In a preferred embodiment, the barrier comprises conformal parts of the inner disc member and outer disc member arranged for engaging and for being movable with respect to each other. The conformal parts are preferably integrally formed with the inner and outer disc member.

The barrier may comprise a protrusion and/or recession formed in the outer disc member engaging with a correspondingly formed protrusion and/or recession in the inner disc member. In a preferred embodiment, the barrier may comprise a plurality of protrusions and/or recessions formed in the outer disc member engaging with correspondingly formed protrusions and/or recessions in the inner disc member.

The barrier is preferably arranged between the central aperture and the at least one outlet aperture of the outer disc member.

The barrier is preferably arranged about the circumference of the central aperture of the outer disc member.

In a particularly preferred embodiment, the barrier may comprise at least two annular recessions or grooves formed in the inner disc member and engaging with two conformal annular bumps or protrusions formed in the outer disc member.

The container may further comprise a retaining member for enabling a close contact of individual parts of the barrier. The retaining member is preferably designed for forcing the individual parts of the barrier to engage with each other. Accordingly, a close contact between the parts of the barrier is enforced and thus, the sealing properties of the barrier are increased.

In a preferred embodiment, the retaining member is configured for exerting a compression force onto at least a part of the barrier. The retaining member may comprise various forms, such as e.g. a pinching member or a spike, suitable for exerting a compression force, respectively a downwards force, onto the barrier and/or the inner and outer disc member.

The retaining member may be integrally formed with a scraping device of the container, arranged for scraping the inner side of the inner rotatable disc member facing the tank of the container, and extending from the center of the container to its lateral side. Thereby, the scraping device may be fixed, i.e. not rotatable with respect to at least the outer disc member.

Such scraping device of the container preferably comprises a blade member arranged to extend essentially perpendicular from the inner surface of the inner disc member facing the tank of the container. It preferably comprises a variable height that increases from the center of the container to its lateral side. Thereby, the height preferably increases from the center of the container towards a position radial offset from the center, in which the at least one aperture is formed in the inner and outer disc member.

Due to such a blade member, an effective barrier is provided for directing the bulk material towards the at least one aperture of the inner disc member during discharging of the product and thus towards the outlet aperture of the outer disc member in case the inner disc member is rotated. Thereby, the increasing height of the blade member towards the lateral side of the container and thus also towards the at least one aperture effectively prevents the product from flowing above the blade member just before exiting the at least one aperture of the inner disc member. This is in particular necessary if the container is almost empty and the bulk material is spread on the whole surface of the bottom of the tank of the container corresponding to the inner surface of the inner disc member. Accordingly, enhanced dispensing is provided that enables a reliable discharge of reproducible amounts of bulk material also in case the container is almost empty.

Preferably, the height of the blade member preferably increases from the center of the container towards a position radial offset from the center, in which the at least one aperture is formed in the inner and outer disc member.

The height of the blade member preferably continuously increases from the center of the container towards the lateral side of the container and/or a position offset from the center, in which the at least one aperture is formed in the inner and outer disc member.

The blade member of the scraping device preferably comprises a highest height comprised between 10 and 20 mm at the lateral side of the container.

The scraping device is usually fixedly arranged within the container, i.e. not rotatable with respect to at least the outer disc member. Consequently, when rotating the inner disc member, the scraping device stays in its predefined position and does not rotate.

The container according to the invention is designed for being selectively connected to a beverage preparation machine. Thereby, the container preferably comprises at least one member for positioning the container in such machine to be fed with the bulk material.

The at least one positioning member of the container in the machine may comprise cam(s) or cam track(s) in a fixed part of the container like the tank or the outer fixed disc member of the dispenser. The cam(s) or cam track(s) can respectively fit in corresponding cam track(s) or cam(s) of a machine.

The at least one positioning member of the container in a machine may also comprise a visual indicator on the surface of the container. The visual indicator - e.g. an arrow - indicates to the user how to position the container in the machine.

When the container of the present invention is stored and/or not used for dispensing, the at least one aperture in the inner rotatable disc member and the at least one outlet aperture in the outer fixed disc member are preferably arranged so that they do not overlap. The relative position of the disc members is preferably fixed during the manufacture of the container so that the apertures do not overlap.

The at least one positioning member of the container in a machine may also be configured for fixing the container to such machine.

The at least one positioning member can comprise a socket in the centre of the inner rotatable disc member, said socket being configured for cooperating with a rotatable shaft of the machine. Accordingly the inner rotatable disc member can be rotated relative to the outer disc member.

The socket preferably presents an asymmetric shape that helps the user for positioning the container in the machine. The end of the shaft in the machine can present a shape corresponding to that socket so that the container can be placed in the machine according to a specific orientation.

According to a particular embodiment, the socket can present a shape that cooperates with different rotatable shafts for different machines.

The center aperture of the outer fixed disc member is preferably sufficiently large so that the dedicated rotary shaft of the beverage preparation machine can cooperate with the inner disc member without bumping on the outer fixed disc member. The outer fixed disc member may be provided with an axial bearing passage for receiving and rotatably supporting the dedicated shaft of a beverage preparation machine to which the container may be connected. Thereby, the shaft does however not engage the outer disc member.

The tank of the container is preferably designed to store a bulk material like powder, free flowing particles, pellets, granulates, granules or grains. In particular, the tank may hold a food ingredient powder such as a soluble beverage ingredient like coffee, chocolate, tea, milk, soup or a coffee mix.

It is noted that the tank may be of any shape such as circular, oval, square, or the like.

The at least one aperture in the inner and outer disc member can be of any shape. Preferably the apertures present the same shape. The at least one aperture in the inner and outer disc members are radially offset from the center aperture of the outer disc member.

The inner disc member can comprise more than one aperture for discharging the bulk material from the container, for example four apertures which are distributed preferably homogenously within the disc and with equal radial distance from the center of the disc. Accordingly bulk material can be dispensed from the container at an increased speed.

The container can be made of at least a material chosen from the group of plastic, cardboard paper, aluminum or a combination and/or laminate of such materials. These materials should present a good humidity barrier and, optionally, good oxygen barrier. Depending on the nature of the bulk material that is intended to be stored inside, these materials can also present UV rays- and light-barrier properties. In a special embodiment a part of the tank can be at least partially transparent by using for example a transparent plastic. Such a transparent part enables the control of the level of the remaining bulk material inside the container when this one is used.

According to a preferred embodiment, the tank of the container can be made by inmould labeling.

According to another preferred embodiment, the tank of the container can be a tin or a can.

The container according to the invention is suitable for being used in a beverage preparation system as described in WO 2012/084964.

According to a second aspect of the invention there is provided a beverage preparation system comprising :
- a container such as previously described, and
- a machine configured for dispensing a dose of bulk material stored in the container, wherein the machine comprises at least a dosing and docking unit to which the container is selectively connectable, the machine further comprising a rotary shaft configured to engage and rotate the inner rotatable disc member of the container when the container is connected to the machine.

Preferably the machine further comprises a mixing chamber connected to at least one liquid supply, the bottom side of the dosing and docking unit cooperating with said mixing chamber.

In this embodiment, since the bottom side of the dosing and docking unit cooperates with the mixing chamber, a dose of bulk material flowing through the aperture of the inner rotatable disc member and the outlet aperture of the outer disc member flows in the mixing chamber. The mixing chamber can be either fixed and permanently placed under said aperture or it can be movable so as to be placed only momentarily under the overlapping apertures of the inner and outer disc members. For example such a machine is described in WO 2009/153157. The container can particularly be used in the system of machine and container described in WO 2012/084964.

According to the invention, a system for enabling a reliable beverage preparation with reproducible beverage quality and strength is provided, even in cases when the container is almost empty, as previously explained. Further the container may be selectively connected to the beverage preparation machine before and after a beverage preparation process and without soiling the beverage preparation machine.

As used in reference to the inner and outer disc members, the terms inner and outer are used to mean that the inner disc member is longitudinally nearer the interior space of the container than the outer disc member.

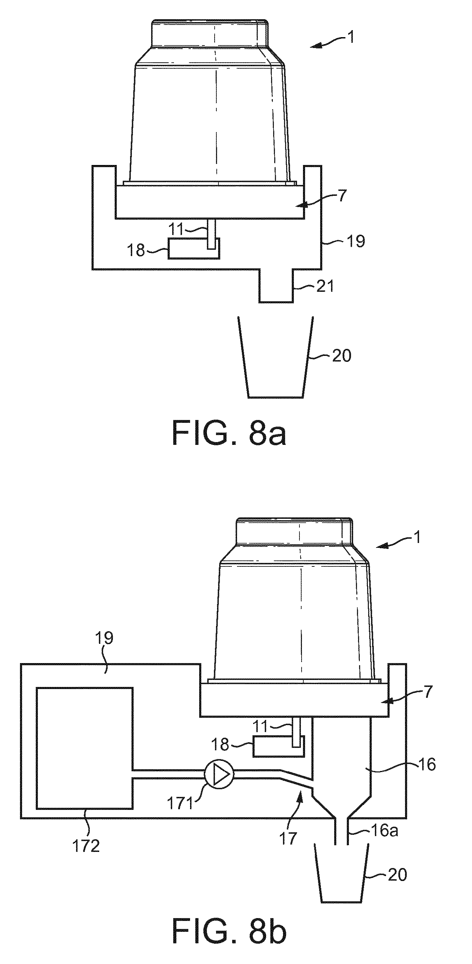

The term "downwards" is used to describe the relational positioning of features of the container or the machine. This term should be understood to refer to the container in its normal orientation when positioned in a beverage preparation dispenser for the production of a beverage as shown in Figures 8a, 8b.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Further features, advantages and objects of the present invention will become apparent for a skilled person when reading the following detailed description of embodiments of the present invention, when taken in conjunction with the figures of the enclosed drawings.
Figure 1 schematically depicts a preferred embodiment of a container according to the invention ;
Figure 2 schematically depicts a bottom view of the container according to Figure 1 ;
Figure 3 schematically depicts a preferred embodiment of the dispenser of the container;
Figure 4a and 4b schematically depict a sectional side view of the dispenser of Figure 3 in assembled state (Fig. 4a) and in disassembled state (Fig. 4b) ;
Figure 5 schematically depicts a detailed view of the dispenser according to the invention ;
Figure 6 schematically depicts another preferred embodiment of the dispenser according to the invention ;
Figures 7a and 7b schematically depict the function of the blade member of the dispenser, wherein Figure 7b is a preferred embodiment according to the invention ; and
Figures 8a, 8b schematically depict dosing and beverage preparation systems according to the invention.

### Detailed description of the figures

It is to be understood that the figures are merely schematic and are not drawn to scale. Further, the same reference numerals are used throughout the figures to indicate the same or similar parts.

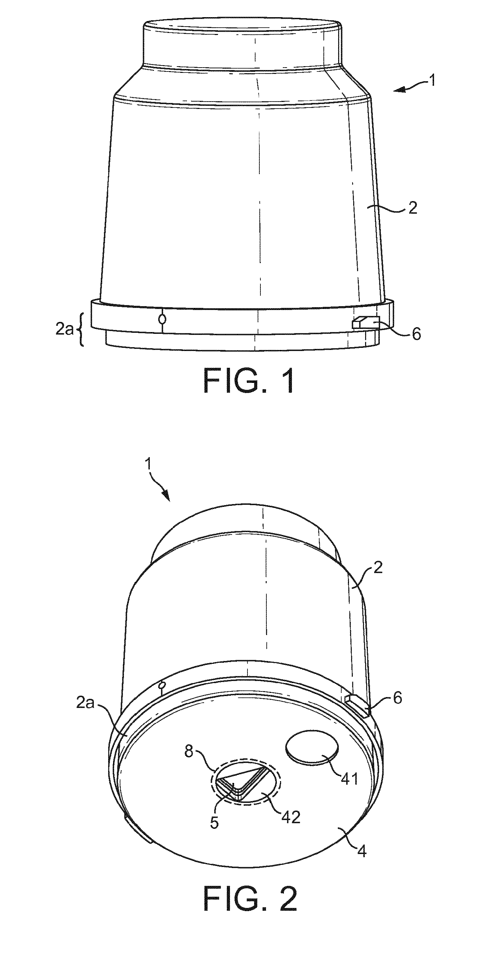

**Figures 1, 2** **and** **3** illustrate a container 1 according to the present invention. The container comprises a tank 2 for storing a bulk material, preferably a powder. The tank 2 is preferably rotational symmetric. The tank 2 is closed by a dispenser 2a attached to the bottom of the tank 2. The dispenser 2a comprise an outer fixed disc member 4 having at least one outlet aperture 41 therein for dispensing the powder as depicted in figure 2. The disc member 4 further comprises a central aperture 42 formed therein. The outlet aperture 41 is arranged radially offset from the central aperture 42. The fixed disc member 4 faces the outside of the container. The fixed disc member 4 is fixedly connected to the tank 2 of the container, i.e. in a non-rotational arrangement relative to the tank 2.

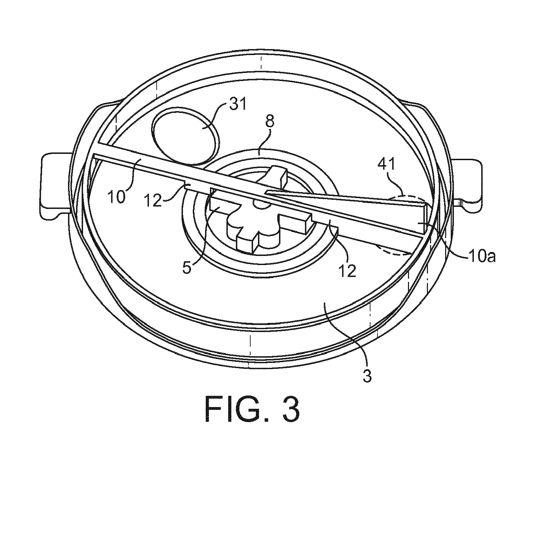

The dispenser 2a further comprise an inner rotatable disc member 3 as depicted in figure 3 which has at least one aperture 31 for dispensing the powder. Thereby, the inner disc member 3 faces the inside of the container 1 and thus forms the bottom of tank 2.

The inner rotatable disc member 3 presents a member for cooperating with a rotatable shaft of the beverage preparation machine to which the container may be selectively connected. This member may be a specifically designed recess 5 provided in the lower side of the inner rotatable disc member 3, which is shaped to be engaged for rotation by a shaft end portion of corresponding shape.

In a preferred embodiment, the recess 5 presents an asymmetric shape such as e.g. triangular shaped when seen in top view, so as to position the container 1 relative to the beverage preparation machine when engaging the shaft end presenting a corresponding end portion (as schematically illustrated in Fig. 8).

The central aperture 42 of the outer fixed disc member 4 enables a rotatable shaft to go through it and cooperate with the inner rotatable disc member 3 without interacting with the outer disc member 4.

In Figure 3, the recess 5 presents a different shape which combines the triangular shape illustrated in Figure 2 and a cross shape enabling the engagement of the inner rotatable disc member 3 with another shaft of another machine. For example, the container can be engaged by the shaft of a machine illustrated in Figure 8a with a corresponding cross shape and also by the shaft of a machine illustrated in Figure 8b with a corresponding triangular shape.

The inner and outer disc members 3, 4 are arranged concentrically at the bottom of the tank 2. For each disc member, the aperture 31, 41 is off-centre that is offset from the centre of the disc member 3, 4. The apertures 31, 41 are positioned in the respective disc members 3, 4 such that they are able to overlap at least in one rotational position of the inner rotatable disc member 3. The apertures 3, 4 are preferably circular and of equal dimensions. However, the apertures 3, 4 may as well comprise other suitable shapes and/or sizes and may as well differ in their shape and/or size as will be apparent to the skilled person.

The container 1 may further comprise positioning members configured for positioning the container in a beverage preparation machine. These members may comprise cams 6 (see fig. 1) cooperating with dedicated cam tracks in the beverage preparation machine.

During manufacture, for filling the container with a powder, the tank 2 is first filled with the powder and then the dispenser 2a are used to close the tank 2. The tank 2 and the dispenser 2a can be attached by any known means like snap-fitting or welding. Preferably the tank 2 and the dispenser 2a cannot be detached one from the other without destroying a part of the container to avoid refilling of the container with a bulk material that is not adapted for delivering to a dedicated beverage preparation machine. Further, the dispenser 2a is preferably configured such that it is difficult or even not possible to manually rotate the inner rotatable disc member to get an overlap of the at least one disc apertures 31,41.

The dispenser 2 of the container further comprise a scraping device 10 designed for scraping the upper side of the inner rotatable disc member 3, i.e. the bottom portion of tank 2, when the inner disc member rotates. The scraping device 10 may be a rod-shaped member extending essentially perpendicular to a longitudinal axis of the tank 2. The scraping device 10 is fixedly arranged within tank 2 by dedicated notches of upward lateral walls of the fixed disc member 4. Accordingly, the scraping device 10 is fixedly arranged with respect to the outer disc member 4 and the tank 2.

The scraping device 10 is designed for assisting in emptying the remaining powder from the inner surface of the inner disc member 3, in particular when the tank 2 is almost empty. Thereby, the scraping device 10 helps to scrape away the remaining powder from the inner surface by pushing the scraped powder into the aperture 41 (indicated in dotted lines in figure 3). As indicated in figure 3, the scraping device is preferably positioned just after the outlet aperture 41 of the outer fixed disc member 4 according to the sense of rotation of the rotatable disc member 3. Hence, when inner disc member 3 is rotated such that the aperture 31 overlaps with the outlet aperture 41 of the outer disc member 4, the scraping device provides a barrier for the powder on the bottom of the tank 2, wherein the accumulated powder is thus directed towards the overlapping apertures 31, 41. The scrapping device 10 will be described in more details later.

The dispenser 2a further comprises a barrier 8 which is designed for preventing a discharge of powder from the central aperture 42 of the outer disc member 4 and/or the ingress of humidity into the tank 2 of the container.

The barrier 8 is preferably arranged between the central aperture 42 of the outer disc member 4 and the at least one aperture 31 of the inner disc member 3. The barrier 8 is arranged in a fluid flow path between the at least one aperture 31 of the inner disc member 3 and the central aperture 42 of the outer disc member 4. In particular, the barrier 8 may be arranged in the interstice between outer disc member 4 and the inner disc member 3.

The barrier 8 is preferably arranged to surround the central aperture 42 of the outer disc member 4 as indicated by the dotted lines in figure 2. Accordingly, the barrier 8 is preferably an annular member provided between the outer disc member 4 and the inner disc member 3.

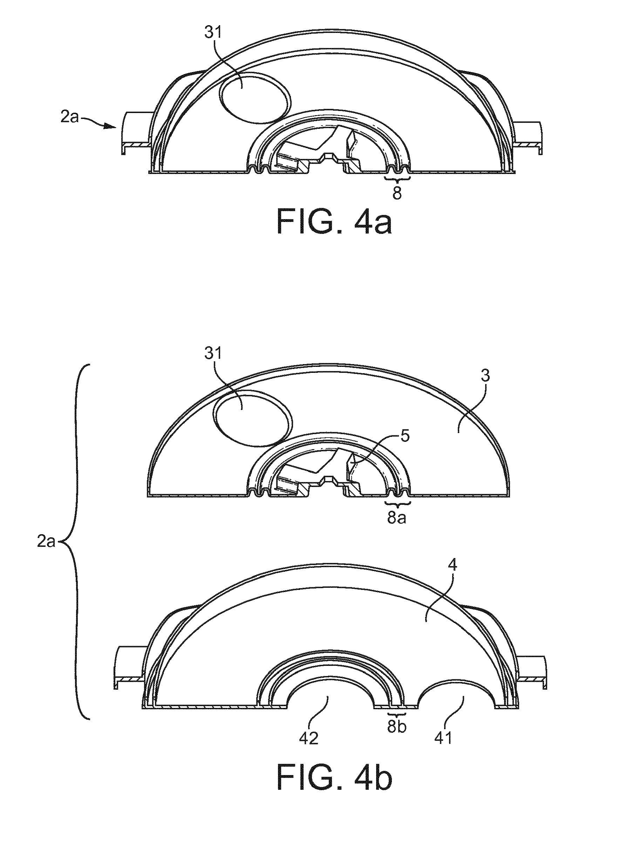

**Figure 4a** schematically shows a sectional side view of a preferred embodiment of the dispenser 2. **Figure 4b** shows the disassembled state respectively an exploded assembly drawing of this dispenser. As indicated in figures 4a and 4b, the barrier 8 is preferably formed of conformal parts in the inner disc member 3 and the outer disc member 4. Thereby, the inner disc member 3 comprises at least two annular recessions or grooves 8a arranged to surround the recess 5 formed in the centre of the inner disc member 3. The recessions or grooves 8a are concentrically arranged with respect to each other. The outer disc member 4 comprises at least two annular protrusions or bumps 8b which are conformal to the shape of the annular recessions 8a and thus designed to engage with recessions 8a. Due to the specific annular shape, the conformal parts 8a, 8b are designed to engage while a rotation of these parts as well as of inner and outer disc members 3, 4 is still enabled.

The barrier 8 thus provides a meander-shaped barrier in section side view, which prevents any powder caught in the interstice between the inner and outer disc member 3, 4 to exit the container via the centre aperture 42. Instead, the barrier 8 provides a trap for any powder that will effectively be prevented from being discharged through centre aperture 42. Further, the barrier 8 also provides a barrier for the ingress of steam or humidity through centre aperture 42 into the interstice between the inner and outer disc member 3, 4 and thus into tank 2 of the container. In particular, ambient humidity or humidity generated by the beverage preparation machine is prevented from entering inside the tank 2 of the container via centre aperture 42.

It is noted that the conformal parts 8a and 8b of the barrier may be formed of any geometric shape, suitable for enabling a rotational movement of the inner and outer disc member relative to each other. Thereby, the conformal parts 8a may comprise a plurality of recessions and/or protrusions configured to engage each other in order to provide a dedicated barrier.

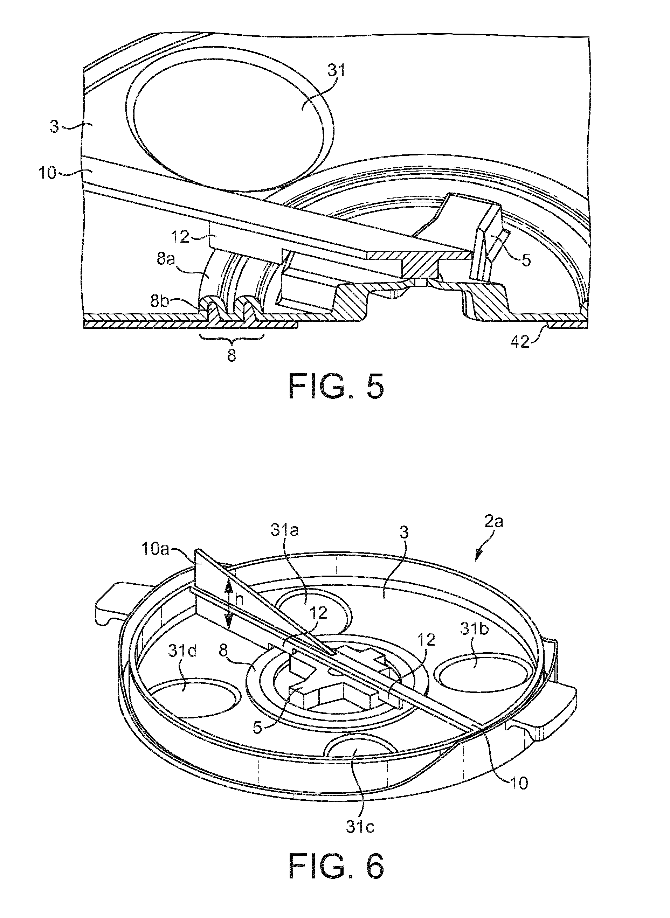

**Figure 5** schematically depicts a detailed view of the barrier 8 according to the preferred embodiment of figure 4a and 4b. As shown in this figure, the barrier 8 may be engaged by dedicated retaining member 12 designed for enabling a close contact of individual parts 8a, 8b of the barrier 8.

The retaining member 12 may be formed by a dedicated member exerting a compression force onto at least part of the barrier 8. Thereby, the retaining member 12 preferably extends from the scraping device 10 downwards in direction of the barrier 8 in order to exert a compression force onto at least the portion 8a of the barrier 8 which is integrally formed with the inner disc member 3 and which is thus urged against the portion 8b of the barrier 8 integrally formed with the outer disc member 4.

The retaining member 12 may comprise a triangular or truncated cone-shaped cross sectional form. The retaining member 12 thus enables a tight contact of the individual parts 8a, 8b of the barrier 8. Accordingly, the sealing function of the barrier 8 is increased.

**Figure 6** depicts an alternative preferred embodiment of the inventive dispenser 2a. Therein, the dispenser comprises an inner disc member 3 having a plurality of apertures 31 formed therein. Due to the provision of a plurality of apertures 31 a, 31 b, 31 c, 31 d in the inner disc member 3, it is possible to dispense a powder from the container at increased speed.

As depicted in figure 6, the inner disc member 3 preferably comprises four apertures 31a, 31b, 31c, 31 d distributed homogenously about the circumference of the inner disc member 3 and with equal radial distance from the center of the disc. The apertures 31 a, 31 b, 31 c, 31 d are preferably of equal size and geometric form. The apertures are preferably arranged at equal angular distance to each other. The apertures 31 a, 31 b, 31 c, 31 d may be circular and have the same diameter. The apertures 31a, 31b, 31c, 31 d may as well be of differing size and/or geometric form as will be apparent to the skilled person.

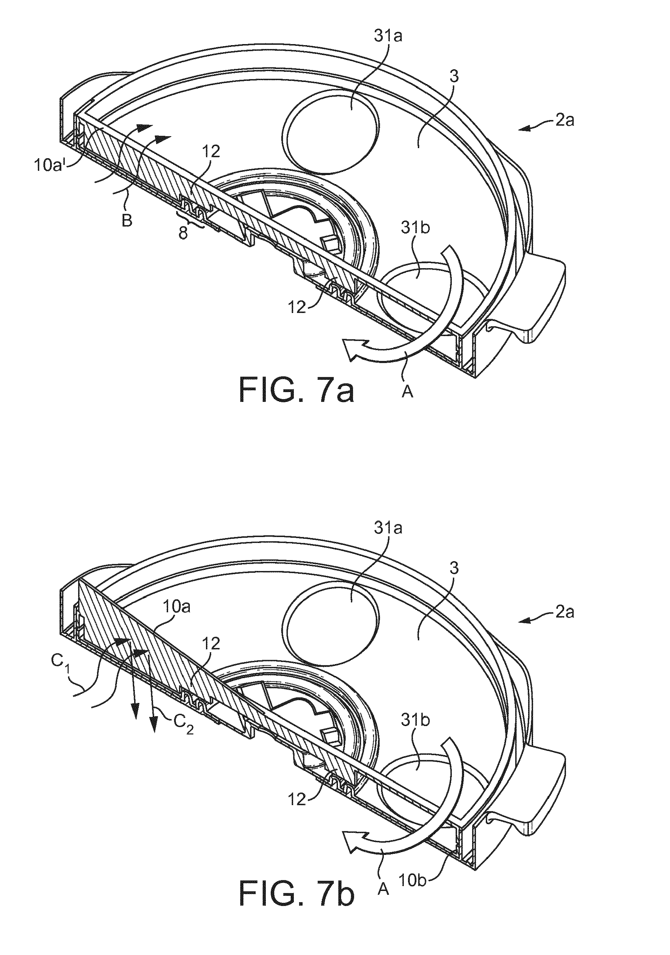

**Figures 7a and 7b** depicts the function of the scraping device 10 of the dispenser 2a, wherein figure 7b is a preferred embodiment according to the invention and figure 7a relates to a prior art solution.

The inner disc member 3 is arranged to be rotated in direction of arrow A as indicated in figures 7a and 7b against a blade member 10a of the scraping device 10. The blade 10a of the scraping device 10 is preferably arranged only in one fixed radial position with respect to the inner and outer disc member 3, 4, whereby the rod of the scraping device extends, preferably linear, about the whole diameter of the disc members 3,4, i.e. from one lateral side of tank 2 to the opposing other lateral side. On an opposing side of the blade member 10a with respect to inner recess 5, the rod-shaped scraping device 10 defines a space 10b for enabling powder to be conveyed on the inner surface of inner disc member 3 through the space 10b and thus towards blade member 10a.

In particular in case the tank 2 is almost empty, the blade member 10a enables an effective scraping of the remaining powder from the inner surface of the disc member 3 and thus towards the at least one aperture 31 of the inner disc member 3 when being brought to overlap with the at least one outlet aperture 41 of the outer disc member 4. Thereby, the blade member 10a presents a weir to scratch the powder from the inner surface and prevent the powder to rotate together with the inner disc member 3 in direction A. The scratched powder will thus accumulate before the blade member 10a and will be forced to flow through apertures 31 and 41 when they are brought into a position to overlap.

In order to prevent the powder which accumulates and builds up before the blade member 10a during rotation of the disc member 3 from flowing over the blade member 10a just before the accumulated powder will exit through aperture 31 (indicated by arrows B for prior art solution of blade member 10a'), the blade member 10a is equipped with a variable height h (see fig. 6) which increases from a center of the rod-shaped scraping device 10 respectively of the container 1 towards a lateral side. Due to such arrangement of the blade member 10a, the powder that accumulates and builds up before the blade member 10a during rotation of the disc member 3 will be prevented from flowing over the blade member and will be effectively discharged through the respective aperture 31 as indicated by arrows C1 and C2 in figure 7b. Thereby, even in case the tank 2 is almost empty, a reproducible amount of powder will be discharged from the container 1 during each dispensing operation by rotation of disc member 3.

The height h of the blade member 10 (see fig. 6) is measured from the inner surface of the disc member 3 in a direction essentially perpendicular to said surface. The height h preferably continuously increases from a center portion of the container 1 towards a lateral side thereof. The blade member of the scraping device preferably comprises a highest height comprised between 10 and 20 mm at the lateral side of the container.

The blade member 10a is arranged to extend essentially perpendicular to the inner surface of the inner disc member 3. The blade member 10a may however as well be arranged at an angle slightly inclined with respect to an axis perpendicular to said surface. Thereby, the blade member 10a may be slightly inclined in a direction opposite to the defined sense of rotation of the disc member 3.

**Figure 8a** schematically depicts the system according to the invention comprising a container 1 and a dosing machine 19 to which the container 1 is selectively connectable.

The machine 19 comprises a docking and dosing unit 7 configured to receive the container 1. Dedicated positioning member may be provided on the container 1 (see e.g. cams 6 in fig. 1) and/or at machine 19 in order to enable a defined positioning of the container 1 in the docking and dosing unit 7. An upper aperture in the docking and dosing unit 7 (not shown) is arranged to overlap with the at least one outlet aperture 41 of the outer disc member 4 such that during dispensing of bulk material from the container 1, bulk material flows into the docking and dosing unit 7. The docking and dosing unit 7 comprises a bulk material outlet 21, generally a pipe, cooperating with the aperture 4 in the outer disc member of the dispenser such as to provide the dosed material from the container 1 into a receptacle 20.

The machine also comprises a motor 18 connected to a dedicated activation shaft 11 for engaging with the inner disc member 3 of the container 1 when the container is connected to the machine 19. Thereby, the activation shaft 11 is designed to rotate the inner disc member 3 upon activation of the motor 18. The activation shaft 11 may further be designed to interact with the docking and dosing unit 7 such as to selectively enable a rotation of at least parts of the docking and dosing unit 7. For example, the shaft 11 may be arranged to selectively open an inlet aperture of the docking and dosing unit 7 upon rotation thereof.

During dosing, a predefined amount of bulk material is dosed. This is obtained by bringing the respective apertures 31, 41 of the inner and outer disc member 3, 4 of the container 1 to overlap and thus dispense a predefined amount of bulk material from the container 1 into docking and dosing unit 7 and thus into receptacle 20. If bulk material is a soluble beverage powder like instant coffee, a milk powder, instant tea or soluble chocolate, a diluent such as water can then be added in the receptacle by the customer according to his/her taste.

This machine is particularly adapted for receiving a container presenting several apertures, preferably four, in the inner rotatable disc of the dispenser such as illustrated in Figure 6.

**Figure 8b** schematically depicts the system according to the invention comprising a container 1 and a beverage preparation machine 19 to which the container 1 is selectively connectable.

The machine 19 comprises a docking and dosing unit 7 configured to receive the container 1. Dedicated positioning member may be provided on the container 1 (see e.g. cams 6 in fig. 1) and/or at machine 19 in order to enable a defined positioning of the container 1 in the docking and dosing unit 7. An upper aperture in the docking and dosing unit 7 (not shown) is arranged to overlap with the at least one outlet aperture 41 of the outer disc member 4 such that during dispensing of bulk material from the container 1, the bulk material flows into the docking and dosing unit 7. The docking and dosing unit 7 is connected to a mixing chamber 16 such as to provide bulk material from the container 1 into said mixing chamber 16. The chamber 16 is connected to a diluent supply 17 for providing a diluent into the mixing chamber, usually a tube or pipe. The diluent supply is connected to a pump 171 and a diluent tank 172 comprised by the beverage preparation machine.

The machine also comprises a motor 18 connected to a dedicated activation shaft 11 for engaging with the inner disc member 3 of the container 1 when the container is connected to the machine 19. Thereby, the activation shaft 11 is designed to rotate the inner disc member 3 upon activation of the motor 18. The activation shaft 11 may further be designed to interact with the docking and dosing unit 7 such as to selectively enable a rotation of at least parts of the docking and dosing unit 7. For example, the shaft 11 may be arranged to selectively open an inlet aperture of the docking and dosing unit 7 upon rotation thereof.

During beverage preparation, a predefined amount of bulk material is first dispensed into the mixing chamber 16 from the container 1. This is obtained by bringing the respective apertures 31, 41 of the inner and outer disc member 3,4 of the container 1 to overlap and thus dispense a predefined amount of bulk material from the container 1 into docking and dosing unit 7 and thus into mixing chamber 16. A diluent such as water is then provided from the tank 172 to the mixing chamber 16 via pump 171 and tubing 17. The resulting liquid beverage is then discharged from an outlet 16a of the mixing chamber 16 into a receptacle 20.

Preferably such a machine corresponds to the machine described in the system of container and machine of WO 2012/084964.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A container (1) for storing and dispensing a bulk material, the container comprising :
- a tank (2), and
- a dispenser for dispensing the product from the tank (2) comprising an inner rotatable disc member (3) with at least one aperture (31), and an outer fixed disc member (4) with a central aperture (42) and at least one outlet aperture (41) therein,
wherein the inner disc member (3) is configured for being selectively rotatable with respect to the outer disc member (4) such that at least in one rotational position of the inner disc member (3), the at least one aperture (31) of the inner disc member (3) overlaps with the at least one outlet aperture (41) of the outer disc member (4) for enabling the dispensing of the product from the container, and
wherein the container further comprises a barrier (8) provided between the central aperture (42) of the outer disc member (4) and the at least one aperture (31) of the inner rotatable disc member (3).

2. A container according to Claim 1, wherein the barrier (8) is designed for providing a meander-shaped barrier to product flow and/or humidity.

3. A container according to any one of the preceding claims, wherein the barrier (8) comprises conformal parts of the inner disc member (3) and outer disc member (4) arranged for engaging and for being movable with respect to each other.

4. A container according to any one of the preceding claims, wherein the barrier (8) comprises a protrusion and/or recession formed in the outer disc member (4) engaging with a correspondingly formed protrusion and/or recession in the inner disc member (3).

5. A container according to any one of the preceding claims, wherein the barrier (8) is arranged between the central aperture (42) and the at least one outlet aperture (41) of the outer disc member (4).

6. A container according to any one of the preceding claims, wherein the barrier (8) is arranged about the circumference of the central aperture (42) of the outer disc member (4).

7. A container according to any one of the preceding claims, wherein the container further comprises at least one retaining member (12) for enabling a close contact of individual parts of the barrier (8).

8. A container according to claim 7, wherein the retaining member (12) is configured for exerting a compression force onto at least a part of the barrier (8).

9. A container according to claim 7 or 9, wherein the retaining member (12) is integrally formed with a scraping device (10) of the container (1), arranged for scraping the inner side of the inner rotatable disc member (3) facing the tank (2) of the container, and extending from the center of the container (1) to its lateral side.

10. A container according to claim 9, wherein the scraping device (10) is fixed, i.e. not rotatable with respect to the outer disc member (4).

11. A container according to claim 9 or 10, wherein the scraping device (10) comprises a blade member (10a) arranged to extend essentially perpendicular from the inner surface of the inner disc member (3), and which comprises a variable height (h) that increases from the center of the container (1) to its lateral side.

12. A container according to any one of the preceding claims, wherein the inner disc member (3) comprises four apertures (31 a, 31 b, 31 c, 31 d) distributed homogenously within said disc (3) and with equal radial distance from the center of the disc.

13. A container according to any one of the preceding claims, wherein the container is designed for being connected to a beverage preparation machine.

14. A beverage preparation system comprising a container (1) according to any one of the preceding claims 1-13, and a dosing machine configured for dispensing a dose of bulk material stored in the container (1),
wherein the machine comprises a dosing and docking unit (7) to which the container (1) is selectively connectable, and
wherein the machine further comprises a rotary shaft (11) configured to engage and selectively rotate the inner rotatable disc member (3) of the container (1) when the container is connected to the machine.

15. A beverage preparation system according to the precedent claim wherein the machine is a beverage preparation machine configured for preparing a beverage from a metered bulk material stored in the container, wherein the beverage preparation machine further comprises a mixing chamber (16) connected to at least one liquid supply (172, 171, 17), the bottom side of the dosing and docking unit cooperating with said mixing chamber.
